# EUROPEAN PATENT SPECIFICATION

(11) **EP 2 913 484 B1**
(45) Date of publication and mention of the grant of the patent: **09.05.2018**
(21) Application number: 15153087.0
(22) Date of filing: 29.01.2015
(51) Int. Cl.: F01D 13/00, H02K 7/18, F01D 15/10

(54) **POWER GENERATOR AND TURBINE COUPLING METHOD**
STROMERZEUGER UND TURBINENKOPPLUNGSVERFAHREN
GÉNÉRATEUR D'ÉNERGIE ET PROCÉDÉ DE COUPLAGE DE TURBINE

(30) Priority: 26.02.2014 JP 2014035804
(43) Date of publication of application: 02.09.2015
(73) Proprietor: Kabushiki Kaisha Toshiba, Tokyo (JP)
(72) Inventor: Fuchi, Takuya, Tokyo (JP); Murakami, Masanori, Tokyo (JP); Chiku, Hitoshi, Tokyo (JP); Nakashima, Yasunori, Tokyo (JP)
(74) Representative: Moreland, David

(56) References cited:
- EP-A2- 2 644 825
- US-A- 4 044 442
- US-A1- 2010 218 508

## Description

### FIELD

The present invention relates to an electric power generator and turbine coupling method.

### BACKGROUND

When a plurality of turbines are coupled together, rotating bodies of the turbines are connected to each other via couplings disposed at end portions of turbine rotating bodies. In this case the couplings to be connected face-to-face to each other are centered for each turbine. More specifically, the rotating bodies of the turbines are rotated and after a shift in position (i.e., the degree of misalignment) and face-to-face inclination (opening angle) between two mating couplings to be connected to each other have been measured for each turbine, bearings disposed in vicinities of the couplings are adjusted so that the degree of misalignment and the opening angle stay within respective predetermined values. The positions of the couplings are adjusted and their centering is conducted in this way. Thereafter, the couplings are connected face-to-face to each other and the turbines are coupled together.

The method to be described below is a known example of how to center the turbine rotating bodies of the turbines. In this method, clearances between the turbine rotating bodies and respective housings are measured in a plurality of places, then measurement results are computer-processed, and the amount of adjustment for centering is calculated. The portion of the housing corresponding to the measured region is changed in position in accordance with the calculated amount of adjustment. Thus the rotating bodies of the turbines are centered by, without the turbine rotating bodies being rotated, executing the clearance measuring once and changing the position of each adjustment section once.

Meanwhile, when a plurality of turbines are coupled to a power generator, after the turbines have all been coupled in any of the above ways, a generator rotating body of the power generator will be centered relative to a turbine rotating body of a turbine adjacent to the generator, or vice versa. The generator rotating body and the turbine rotating body will then be connected consequently. For example, after all turbines have been disassembled and checked or in a case of newly installing a plurality of turbines, the generator rotating body and the turbine rotating body of one of the turbines will be centered only after all of the turbines have been assembled and coupled together. The reason for this is that the assembled state of the turbines or the number of turbines coupled has traditionally been considered to affect aligning accuracy of the coupling of the turbine located next to the generator. In addition, if the turbine has an upper-half housing and a lower-half housing, it has been considered that the position of the coupling of the particular turbine could change depending on whether the upper-half housing is already mounted.

In cases where the turbine rotating body is supported by a thrust bearing, the turbine rotating body would be aligned with the thrust bearing in order to avoid contact of the turbine rotating body with a stationary body such as a housing. This is part of the reason why it has been thought to be effective to perform the centering of the plurality of turbine rotating bodies preferentially over that of the power generator and a turbine rotating body.

As discussed above, when a power generator and a plurality of turbines are coupled together, the connection between the generator rotating body and a turbine rotating body of a turbine adjacent to the generator will be started only after the connection between the rotating bodies of all other turbines has been completed. This has made it impossible to start the operation of centering and then connecting the generator rotating body and the turbine rotating body of the turbine adjacent to the generator until the connection of all turbine rotating bodies has been completed. For this reason, the order in which the generator and the plurality of turbines are to be coupled has been restricted and efficient work has been difficult to accomplish. If a long time is required to connect a plurality of turbine rotating bodies together, for example, high operating efficiency has been difficult to obtain since the centering of the generator rotating body and the turbine rotating body of a turbine will be started after all turbine rotating bodies have been connected. In addition, if a turbine rotating body, for example, is to be replaced without the generator rotating body of an existing power generator being replaced, the turbine will be assembled in the field and then the coupling of the turbine rotating body and that of the generator rotating body will be subjected to be a reaming operation. Because the reaming will be only after the connection of all turbine rotating bodies, the efficient work has also been difficult. Document US 4 044 442 A discloses a method for coupling mechanically a gas turbine apparatus to an electric power generator.

### BRIEF DESCRIPTION OF THE DRAWINGS

FIG. 1 is a diagram that relates to an electric power generator and turbine coupling method in a first embodiment, the diagram illustrating conditions for performing the centering of a generator rotating body of the power generator and a turbine rotating body of a first turbine is performed;
FIG. 2 is a diagram that shows analytically obtained amounts of deflection of turbine rotating bodies;
FIG. 3 is a flowchart for describing the electric power generator and turbine coupling method in the first embodiment;
FIG. 4 is a diagram that relates to an electric power generator and turbine coupling method in a second embodiment, the diagram illustrating conditions for performing the centering of a generator rotating body of the power generator and a turbine rotating body of a first turbine;
FIG. 5 is a flowchart for describing the electric power generator and turbine coupling method in the second embodiment;
FIG. 6 is a diagram that relates to an electric power generator and turbine coupling method in a third embodiment, the diagram illustrating conditions for performing the centering of a generator rotating body of the power generator and a turbine rotating body of a first turbine;
FIG. 7 is a flowchart for describing the electric power generator and turbine coupling method in the third embodiment;
FIG. 8 is a diagram that relates to an electric power generator and turbine coupling method in a fourth embodiment, the diagram illustrating conditions for performing the centering of a generator rotating body of the power generator and a turbine rotating body of a first turbine;
FIG. 9 is a diagram that shows analytically obtained amounts of deflection of turbine rotating bodies;
FIG. 10 is a flowchart for describing the electric power generator and turbine coupling method in the fourth embodiment;
FIG. 11 is a diagram that relates to a modification of the fourth embodiment, the diagram illustrating a certain amount of offsetting of a coupling of a first turbine rotating body; and
FIG. 12 is a diagram that relates to another modification of the fourth embodiment, the diagram illustrating another amount of offsetting of a coupling of a first turbine rotating body.

### DETAILED DESCRIPTION

Provided is a power generator and turbine coupling method in an embodiment relates to coupling the power generator including a generator rotating body, a first turbine including a first turbine rotating body, and a second turbine including a second turbine rotating body in this order. This coupling method includes assembling the power generator, the first turbine, and the second turbine, aligning the generator rotating body of the assembled power generator and the first turbine rotating body of the assembled first turbine, connecting the aligned generator rotating body and the aligned first turbine rotating body, and connecting the first turbine rotating body of the assembled first turbine and the second turbine rotating body of the assembled second turbine. The assembling of the second turbine or the connecting of the first turbine rotating body and the second turbine rotating body is performed i in parallel with or after the aligning of the generator rotating body and the first turbine rotating body.

A power generator and turbine coupling method in another embodiment not according to the invention but useful for understanding the invention relates to coupling the power generator including a generator rotating body and a turbine including a turbine rotating body, an upper-half housing, and a lower-half housing. This method includes assembling the power generator, installing the turbine rotating body of the turbine in the lower-half housing of the turbine to assemble the turbine, aligning the generator rotating body of the assembled power generator with respect to the turbine rotating body of the assembled turbine, and connecting the aligned generator rotating body and the aligned turbine rotating body. After the connecting of the generator rotating body and the turbine rotating body, the upper-half housing of the turbine is mounted on the lower-half housing.

Hereunder, the electric power generator and turbine coupling method in the embodiments will be described with reference to the accompanying drawings.

### (First Embodiment)

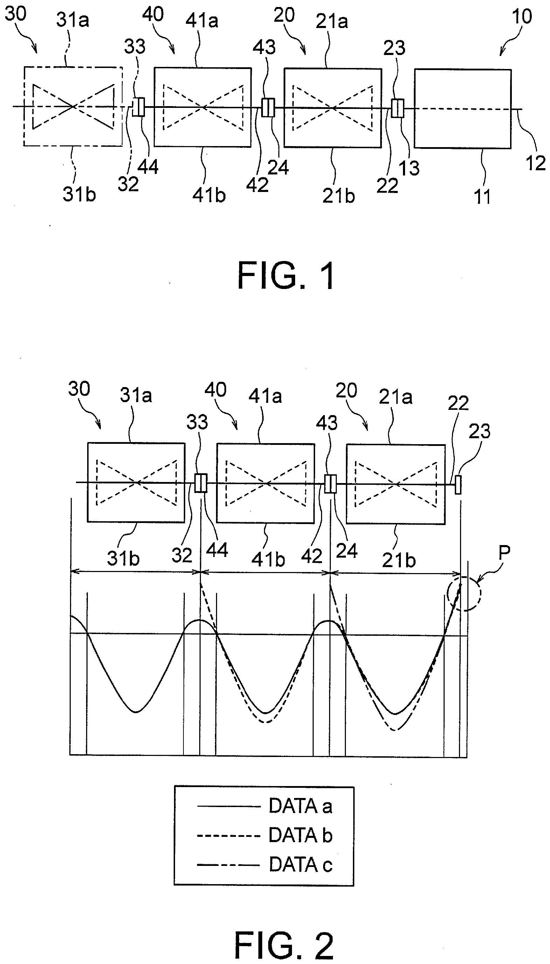

An electric power generator and turbine coupling method in a first embodiment will first be described below with reference to FIGS. 1 to 3. A method of coupling one electric power generator, 10, and three turbines (a first turbine 20, a second turbine 30, and a third turbine 40) will be described as an example in the present embodiment.

First, layout and configuration of the power generator 10 and the turbines 20, 30, and 40 will be described below with reference to FIG. 1. As shown in FIG. 1, the power generator 10, the first turbine 20, the third turbine 40, and the second turbine 30 say, the first turbine 20 is disposed adjacently to the power generator 10, then the third turbine 40 is disposed at a side of the first turbine 20 that is opposite to the generator 10, and the second turbine 30 is disposed at a side of the third turbine 40 that is opposite to the first turbine 20.

The generator 10 includes a housing 11 and a generator rotating body 12 rotatably disposed in the housing 11. The generator 10 is designed so that it generates electric power by rotationally driving the generator rotating body 12. The generator rotating body 12 includes a first coupling 13 disposed at an end portion facing the first turbine 20.

The first turbine 20 includes an upper-half housing 21a, a lower-half housing 21b, and a first turbine rotating body 22 rotatably disposed between the upper-half housing 21a and the lower-half housing 21b. The first turbine rotating body 22 includes a turbine rotor and a plurality of rotor blades disposed on the turbine rotor (neither the turbine rotor nor the rotor blades are shown in FIG. 1). A plurality of stator vanes (not shown) that alternate with the rotor blades are arranged in the upper-half housing 21a and the lower-half housing 21b. This configuration of the power generator and turbines causes a supplied working fluid (e.g., steam) within the first turbine 20 to perform expansion work while passing through the rotor blades and the stator vanes, and thereby the first turbine rotating body 22 to be driven to rotate. The first turbine rotating body 22 further includes a second coupling 23 disposed at an end portion facing the generator 10 and a third coupling 24 disposed at an end portion opposite to the generator 10 (this end portion faces the third turbine 40).

The second turbine 30, which has substantially the same configuration as that of the first turbine 20, includes an upper-half housing 31a, a lower-half housing 31b, and a second turbine rotating body 32 rotatably disposed between the upper-half housing 31a and the lower-half housing 31b. The second turbine rotating body 32 includes a fourth coupling 33 disposed at an end portion facing the third turbine 40.

The third turbine 40, which also has substantially the same configuration as that of the first turbine 20, includes an upper-half housing 41a, a lower-half housing 41b, and a third turbine rotating body 42 rotatably disposed between the upper-half housing 41a and the lower-half housing 41b. The third turbine rotating body 42 includes a fifth coupling 43 disposed at an end portion facing the first turbine 20, and a sixth coupling 44 disposed at an end portion opposite to the second turbine 30.

The first coupling 13 of the generator rotating body 12 and the second coupling 23 of the first turbine rotating body 22 are centered (aligned) with respect to each other, and the two couplings are connected with bolts or other fastening members. Similarly the third coupling 24 of the first turbine rotating body 22 and the fifth coupling 43 of the third turbine rotating body 42 are centered and connected, and the sixth coupling 44 of the third turbine rotating body 42 and the fourth coupling 33 of the second turbine rotating body 32 are centered and connected. When the generator rotating body 12, the first turbine rotating body 22, the third turbine rotating body 42, and the second turbine rotating body 32 are connected in this manner, the working fluid supplied to the turbines 20, 30, and 40 will respectively drive the turbine rotating bodies 22, 32, and 42 of the turbines to rotate. Their rotational driving force will be transmitted to the generator rotating body 12 consequently. The generator 10 will then generate electricity.

The conditions for performing the centering of the generator rotating body 12 and the first turbine rotating body 22 will now be described below with reference to FIGS. 1 and 2.

FIG. 2 shows analytical results on deflection of the turbine rotating bodies 22, 32, and 42 that occurs before these turbine rotating bodies are connected to the generator rotating body 12. Data marked with "a" in FIG. 2 represents the deflection of the turbine rotating bodies 22, 32, and 42 that occurs in a state that the first turbine rotating body 22, the third turbine rotating body 42, and the second turbine rotating body 32 are connected. Data marked with "b" represents the deflection of the first turbine rotating body 22 and third turbine rotating body 42 that occurs in a state that whereas the first turbine rotating body 22 and the third turbine rotating body 42 are connected, the third turbine rotating body 42 and the second turbine rotating body 32 are not connected. Data marked with "c" represents the deflection of the first turbine rotating body 22 that occurs in a state that the first turbine rotating body 22 and the third turbine rotating body 42 are not connected.

It can be seen from the three sets of data that as indicated by section *P* in FIG. 2, a position of the second coupling 23 disposed at the side of the first turbine rotating body 22 that faces the generator 10 is substantially constant, regardless of the number of turbine rotating bodies connected to the first turbine rotating body 22. In other words, it has been confirmed that positions of the second coupling 23, the positions being indicated as data "b" and data "c" where the connection between the turbine rotating bodies 22, 32, and 42 is not completed, are equal to or less than determined reference values. It has also been confirmed that these positions of the second coupling 23 are substantially the same as a position of the second coupling 23 that is indicated as data "a" where the connection between the turbine rotating bodies 22, 32, and 42 is already completed. Thus, even if the first turbine rotating body 22 is not connected to the third turbine rotating body 42 or the second turbine rotating body 32, the first turbine rotating body 22 still could be centered relative to and connected to the generator rotating body 12. This means that the second turbine 30 can be assembled in parallel with or after the step of centering the generator rotating body 12 and the first turbine rotating body 22. Alternatively, if the centering of the generator rotating body 12 and the first turbine rotating body 22 follows the assembly of the second turbine 30, the first turbine rotating body 22 and the second turbine rotating body 32 can be connected in parallel with or after the step of centering the generator rotating body 12 and the first turbine rotating body 22.

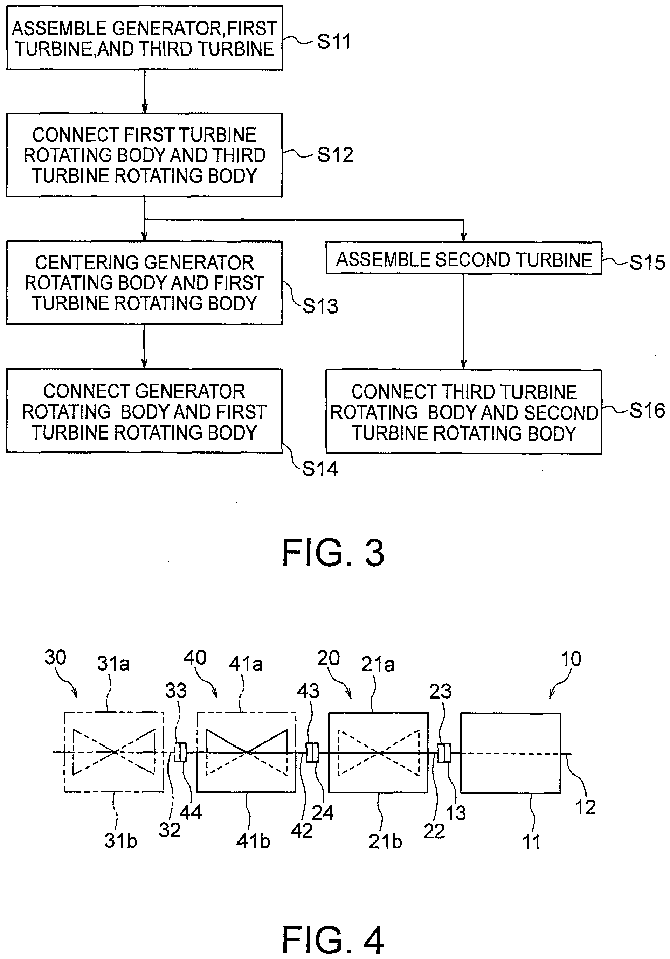

An example in which, as shown in FIG. 1, the second turbine 30 is assembled in parallel with the step of centering the generator rotating body 12 and the first turbine rotating body 22 will be described below with reference to FIG. 3.

First, the generator 10, the first turbine 20, and the third turbine 40 are assembled (step S11). In this case, the housing 11 of the generator 10 is disposed in a predetermined position and after the generator rotating body 12 has been installed, the generator 10 itself is assembled. Additionally, the lower-half housing 21b of the first turbine 20 and the lower-half housing 41b of the third turbine 40 are disposed in predetermined respective positions, then the first turbine rotating body 22 and the third turbine rotating body 42 are installed in the corresponding lower-half housings 21b and 41b, and the upper-half housings 21a and 41a are respectively mounted on the lower-half housings 21b and 41b.

Next, the first turbine rotating body 22 and the third turbine rotating body 42 are connected (step S12). In this case, the third coupling 24 of the first turbine rotating body 22 and the fifth coupling 43 of the third turbine rotating body 42 are first centered relative to each other. As an example, a shift in position (i.e., a degree of misalignment) and face-to-face inclination (opening angle) between the third coupling 24 and the fifth coupling 43 are measured, a bearing of the first turbine 20, disposed in a vicinity of the third coupling 24, and a bearing of the third turbine 40, disposed in a vicinity of the fifth coupling 43, are adjusted so that the degree of misalignment and the opening angle stay within respective predetermined values. To be more specific, positions of the couplings 24 and 43 can each be adjusted by adjusting thickness of or the number of a shim intervening between the housing and the bearing. In this way, the third coupling 24 and the fifth coupling 43 can be centered. After the centering, the third coupling 24 and the fifth coupling 43 are connected, which in turn causes the first turbine rotating body 22 and the third turbine rotating body 42 to be connected and the first turbine 20 and the third turbine 40 to be coupled together.

Next, the generator rotating body 12 and the first turbine rotating body 22 are centered and connected. In this case, the first coupling 13 of the generator rotating body 12 and the second coupling 23 of the first turbine rotating body 22 are first centered relative to each other (step S13). This centering operation can be performed in a manner similar to that of centering the third coupling 24 and the fifth coupling 43. After this step, the first coupling 13 of the generator rotating body 12 and the second coupling 23 of the first turbine rotating body 22 are connected (step S14).

In parallel with above step S13, the second turbine 30 is assembled (step S15). In this case, the lower-half housing 31b of the second turbine 30 is disposed in a predetermined position and the second turbine rotating body 32 is installed in the lower-half housing 31b. Moreover, the upper-half housing 31a is mounted on the lower-half housing 31b.

After the second turbine 30 has been assembled, the second turbine rotating body 32 is connected to the first turbine rotating body 22 (step S16). In this case, the sixth coupling 44 of the third turbine rotating body 42 and the fourth coupling 33 of the second turbine rotating body 32 are centered first. This centering operation can be performed in the manner similar to that of centering the third coupling 24 and the fifth coupling 43. After this step, the sixth coupling 44 and the fourth coupling 33 are connected and the third turbine rotating body 42 and the second turbine rotating body 32 are connected. That is to say, the second turbine rotating body 32 is connected to the first turbine rotating body 22 via the third turbine rotating body 42. Step S16, if it follows step S15, may be executed in parallel with or after step S13.

In this manner, the generator 10, the first turbine 20, the third turbine 40, and the second turbine 30 are coupled together.

As described above, the present embodiment enables the second turbine 30 to be assembled or the first turbine rotating body 22 and the second turbine rotating body 32 to be connected, in parallel with or after the step of centering the generator rotating body 12 of the power generator 10 and the first turbine rotating body 22 of the first turbine 20. As a consequence, restrictions on the order in which the generator 10 and the turbines 20, 30, and 40 are to be coupled can be eased, and thereby operating efficiency can be improved. In other words, the connection of the generator rotating body 12 and the first turbine rotating body 22 can be performed without waiting for the connection of the third turbine rotating body 42 and the second turbine rotating body 32 to be completed. For example, even if a long time is required to connect the third turbine rotating body 42 and the second turbine rotating body 32 together, the connection between the generator rotating body 12 and the first turbine rotating body 22 could be started before the connection of the third turbine rotating body 42 and the second turbine rotating body 32 is completed. Accordingly, the operating efficiency of the connection between the generator 10 and the turbines 20, 30, and 40 can be raised.

Moreover, when the second turbine 30 is assembled in parallel with the step of centering the generator rotating body 12 and the first turbine rotating body 22 as described in the present embodiment, the assembly of the second turbine 30 and the connection of the third turbine rotating body 42 and the second turbine rotating body 32 can be performed with making effective use of time. The working time for the operations can be consequently reduced.

The example in which the second turbine 30 is assembled in parallel with the step of centering the generator rotating body 12 and the first turbine rotating body 22 has been described in the present embodiment. The embodiment, however, is not limited to the described example. The assembly of the second turbine 30 may precede the step of centering the generator rotating body 12 and the first turbine rotating body 22. Moreover, the connection between the first turbine rotating body 22 and the second turbine rotating body 32 may be performed in parallel with the step of centering the generator rotating body 12 and the first turbine rotating body 22. In these cases as well the operating efficiency of the connection between the generator 10 and the turbines 20, 30, and 40 will improve for reduced working time. Furthermore, the step of centering the generator rotating body 12 and the first turbine rotating body 22 may be followed by the assembly of the second turbine 30 and further followed by the connection of the first turbine rotating body 22 and the second turbine rotating body 32.

### (Second Embodiment)

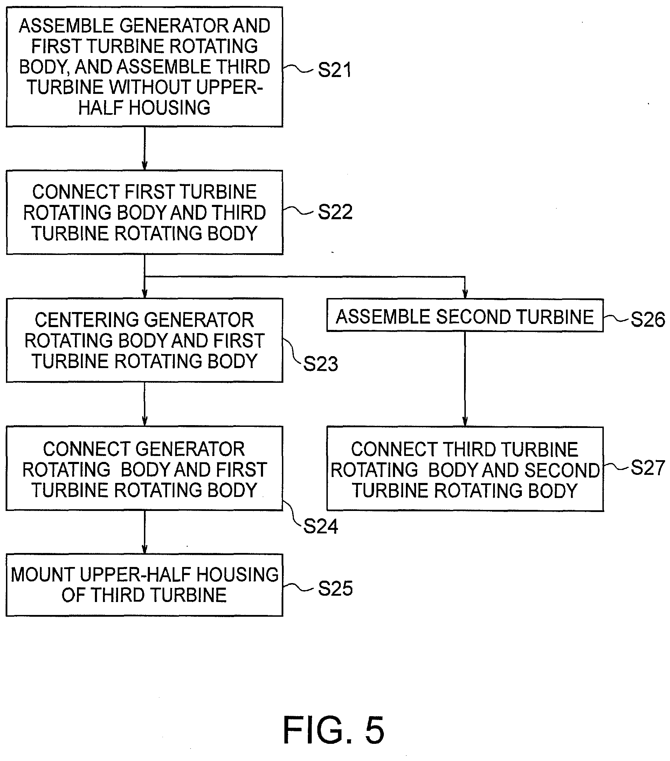

An electric power generator and turbine coupling method in a second embodiment will now be described below with reference to FIGS. 4 and 5.

The second embodiment shown in FIGS. 4 and 5 differs from the first embodiment of FIGS. 1 to 3 primarily in that an upper-half housing of a third turbine is assembled after the step of coupling an electric power generator rotating body and a first turbine rotating body together. The other configurations of the second embodiment are substantially the same as those of the first embodiment. It should be noted that with reference to FIGS. 4 and 5, the same reference number is assigned to each of the same elements as those of the first embodiment shown in FIGS. 1 to 3, and detailed description is thus omitted.

FIG. 2 indicates that as described above, even in a case where the first turbine rotating body 22 is not connected to a third turbine rotating body 42, the first turbine rotating body 22 still could be centered relative to the generator rotating body 12 and then be connected to the generator rotating body 12. This means that even in a case where the upper-half housing 41a of the third turbine 40 is not mounted, the first turbine rotating body 22 that has been connected to the third turbine rotating body 42 still could be centered relative to and connected to the generator rotating body 12.

An example in which, as shown in FIG. 4, the upper-half housing 41a of the third turbine 40 is mounted after the step of centering and then connecting the power generator rotating body 12 and the first turbine rotating body 22 will be described below with reference to FIG. 5.

First, the generator 10 and the first turbine 20 are assembled and the third turbine 40 is assembled to a state in which the upper-half housing 41a is not mounted (step S21). That is to say, the lower-half housing 41b of the third turbine 40 is disposed in a predetermined position and the third turbine rotating body 42 is mounted in the lower-half housing 41b. The upper-half housing 41a is not mounted at this phase.

After this step, the first turbine rotating body 22 and the third turbine rotating body 42 are connected (step S22).

Next, the generator rotating body 12 and the first turbine rotating body 22 are centered and connected. In this case, a first coupling 13 of the generator rotating body 12 and a second coupling 23 of the first turbine rotating body 22 are centered first (step S23). The first coupling 13 and the second coupling 23 are subsequently connected (step S24).

After these steps, the upper-half housing 41a of the third turbine 40 is mounted on the lower-half housing 41b (step S25).

In parallel with above step S23, the second turbine 30 is assembled (step S26). After this step, a second turbine rotating body 32 is connected to the first turbine rotating body 22 via the third turbine rotating body 42 (step S27).

In this manner, the generator 10, the first turbine 20, the third turbine 40, and the second turbine 30 are coupled together.

As described above, in the present embodiment, the upper-half housing 41a of the third turbine 40 is mounted on the lower-half housing 41b after the step of centering and then connecting the generator rotating body 12 and the first turbine rotating body 22. In other words, before the upper-half housing 41a of the third turbine 40 is mounted, the centering of the generator rotating body 12 and the first turbine rotating body 22 can be started. Thus, restrictions on the order in which the generator 10 and the turbines 20, 30, and 40 are to be coupled can be eased and thereby the operating efficiency can be raised.

### (Third Embodiment)

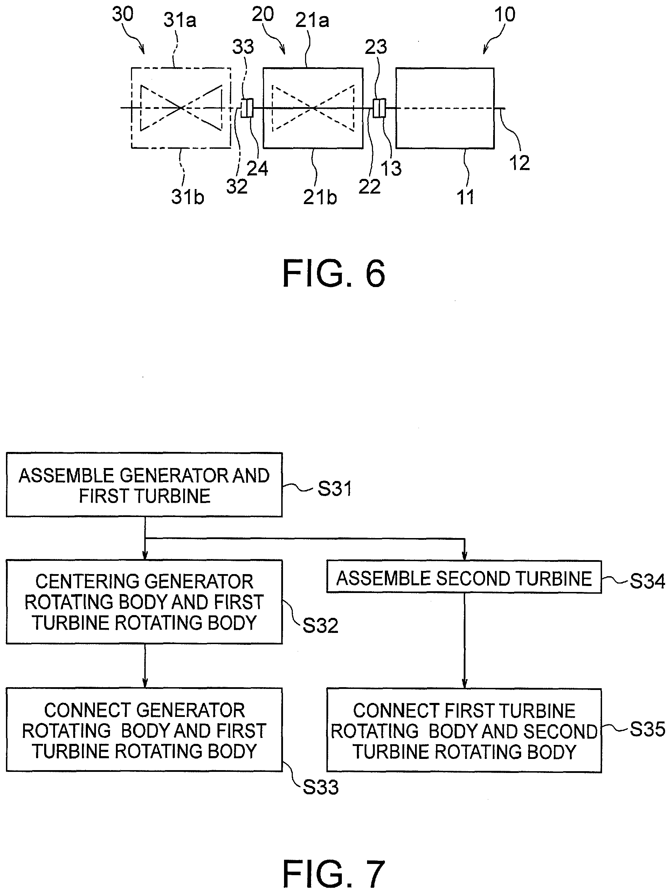

An electric power generator and turbine coupling method in a third embodiment will now be described below with reference to FIGS. 6 and 7.

The third embodiment shown in FIGS. 6 and 7 differs from the first embodiment of FIGS. 1 to 3 primarily in that a third turbine is not disposed between a first turbine and a second turbine. The other configurations of the third embodiment are substantially the same as those of the first embodiment. With reference to FIGS. 6 and 7, the same reference number is assigned to each of the same elements as those of the first embodiment shown in FIGS. 1 to 3, and detailed description is thus omitted.

As shown in FIG. 6, the third turbine 40 is not disposed between the first turbine 20 and the second turbine 30. That is to say, in the present embodiment, the first turbine 20 and the second turbine 30 are coupled to the generator 10.

FIG. 2 indicates that as described above, even in a case where a first turbine rotating body 22 is not connected to a third turbine rotating body 42, the first turbine rotating body 22 still could be centered relative to a generator rotating body 12 and then connected to the generator rotating body 12. This means that in a case where the third turbine 40 is not disposed between the first turbine 20 and the second turbine 30, the generator rotating body 12 still could be centered relative to the first turbine rotating body 22 and then connected to the first turbine rotating body 22 in a state that the first turbine rotating body 22 is not connected to a second turbine rotating body 32. That is to say, even in a case where the third turbine 40 does not intervene between the first turbine 20 and the second turbine 30, the second turbine 30 still could be assembled in parallel with or after the step of centering the generator rotating body 12 and the first turbine rotating body 22. Alternatively, if the centering of the generator rotating body 12 and the first turbine rotating body 22 follows the assembly of the second turbine 30, the first turbine rotating body 22 and the second turbine rotating body 32 could be connected in parallel with or after the step of centering the generator rotating body 12 and the first turbine rotating body 22.

An example in which, as shown in FIG. 6, the second turbine 30 is assembled in parallel with the step of centering the generator rotating body 12 and the first turbine rotating body 22 will be described below with reference to FIG. 7.

First, the generator 10 and the first turbine 20 are assembled (step S31).

Next, the generator rotating body 12 and the first turbine rotating body 22 are centered and connected. In this case, a first coupling 13 of the generator rotating body 12 and a second coupling 23 of the first turbine rotating body 22 are centered first (step S32). The first coupling 13 and the second coupling 23 are subsequently connected (step S33).

In parallel with above step S32, the second turbine 30 is assembled (step S34). After this step, the second turbine rotating body 32 is connected to the first turbine rotating body 22 (step S35).

The generator 10, the first turbine 20, and the second turbine 30 are coupled in this manner.

As described above, in the present embodiment, even in a case where the third turbine 40 does not intervene between the first turbine 20 and the second turbine 30, the second turbine 30 still could be assembled or the first turbine rotating body 22 and the second turbine rotating body 32 can be connected, in parallel with or after the step of centering the generator rotating body 12 and the first turbine rotating body 22. In other words, before the first turbine rotating body 22 is connected to the second turbine rotating body 32, the connection of the generator rotating body 12 and the first turbine rotating body 22 can be started. Thus, restrictions on the order in which the generator 10 and the turbines 20 and 30 are to be coupled can be eased and thereby the operating efficiency can be improved.

### (Fourth Embodiment)

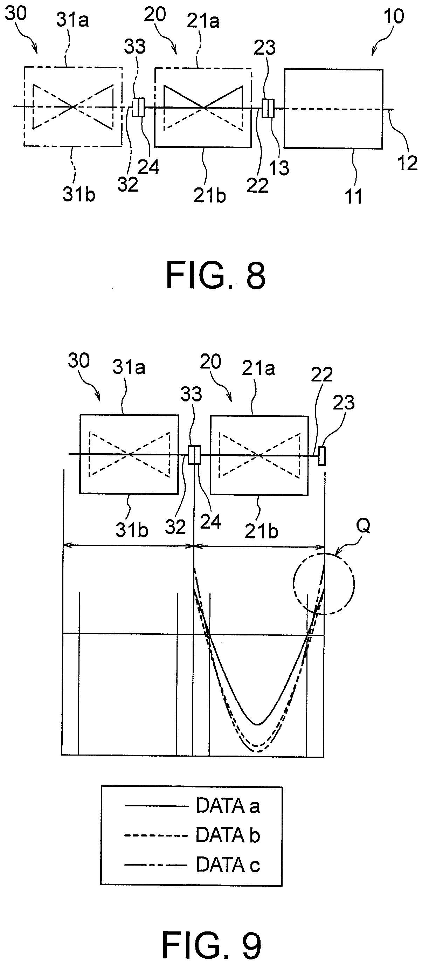

An electric power generator and turbine coupling method in a fourth embodiment will now be described below with reference to FIGS. 8 to 10.

The fourth embodiment shown in FIGS. 8 to 10 differs from the first embodiment of FIGS. 1 to 3 primarily in that an upper-half housing of a first turbine is mounted on a lower-half housing after the step of connecting an electric power generator rotating body and a first turbine rotating body. The other configurations of the fourth embodiment are substantially the same as those of the first embodiment. With reference to FIGS. 8 to 10, the same reference number is assigned to each of the same elements as those of the first embodiment shown in FIGS. 1 to 3, and detailed description is thus omitted.

As shown in FIG. 8, a third turbine 40 is not disposed between the first turbine 20 and a second turbine 30. That is to say, in the present embodiment, the first turbine 20 and the second turbine 30 are coupled to the generator 10.

FIG. 9 shows analytical results on deflection of the turbine rotating bodies 22 and 32 that occurs before these turbine rotating bodies are connected to the generator rotating body 12. Data marked with "a" in FIG. 9 represents the deflection of the first turbine rotating body 22 that occurs in a state that whereas the upper-half housing 21a of the first turbine 20 is mounted on the lower-half housing 21b, the first turbine rotating body 22 and a second turbine rotating body 32 are not connected. Data marked with "b" represents the deflection of the first turbine rotating body 22 that occurs in a state that the upper-half housing 21a of the first turbine 20 is not mounted on the lower-half housing 21b and the connection of the first turbine rotating body 22 and the second turbine rotating body 32 are not connected.

It can be seen from the two sets of data that as indicated by section Q in FIG. 9, a position of a second coupling 23 disposed at a side of the first turbine rotating body 22 that faces the generator 10 is substantially constant, irrespective of whether the upper-half housing 21a of the first turbine 20 is mounted on the lower-half housing 21b. In other words, it has been confirmed that the position of the second coupling 23, indicated as data "b" where the upper-half housing 21a is not mounted, is equal to or less than a determined reference value. It has also been confirmed that the above position of the second coupling 23 is substantially the same as a position of the second coupling 23 that is indicated as data "a" where the upper-half housing 21a is already mounted. Thus, even in a case where the upper-half housing 21a is not mounted, the first turbine rotating body 22 still could be centered relative to and then connected to the generator rotating body 12.

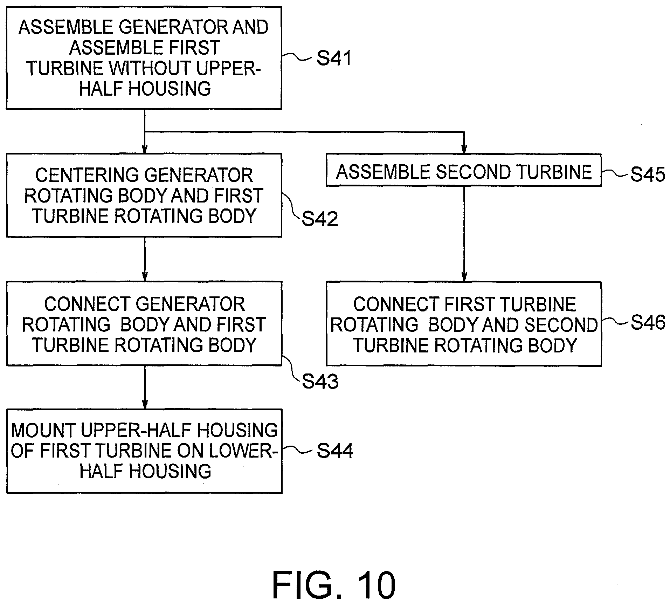

An example in which, as shown in FIG. 8, the upper-half housing 21a of the first turbine 20 is mounted after the step of centering and then connecting the generator rotating body 12 and the first turbine rotating body 22 will be described below with reference to FIG. 10.

First, the generator 10 is assembled while the first turbine 20 is assembled to a state in which the upper-half housing 21a is not mounted (step S41). More specifically, the lower-half housing 21b of the first turbine 20 is disposed in a predetermined position and then the first turbine rotating body 22 is installed in the lower-half housing 21b. The upper-half housing 21a is not mounted at this phase.

Next, the generator rotating body 12 and the first turbine rotating body 22 are centered and then connected. In this case, a first coupling 13 of the generator rotating body 12 and the second coupling 23 of the first turbine rotating body 22 are first centered (step S42). After this step, the first coupling 13 and the second coupling 23 are connected (step S43).

After this step, the lower-half housing 21b of the first turbine 20 is mounted in the lower-half housing 21b (step S44).

In parallel with above step S42, the second turbine 30 is assembled (step S45). After this step, the second turbine rotating body 32 is connected to the first turbine rotating body 22 (step S46).

The generator 10, the first turbine 20, and the second turbine 30 are coupled in this manner.

As described above, in the present embodiment, the upper-half housing 21a of the first turbine 20 is mounted on the lower-half housing 21b after the step of centering and then connecting the generator rotating body 12 and the first turbine rotating body 22. In other words, before the upper-half housing 21a of the first turbine 20 is mounted, the centering of the generator rotating body 12 and the first turbine rotating body 22 can be started. Thus, restrictions on the order in which the generator 10 and the turbines 20 and 30 are to be coupled can be eased and thereby the operating efficiency can be improved.

In the present embodiment described above, the second coupling 23 of the first turbine rotating body 22 may be offset in step S42, that is, the step of centering the generator rotating body 12 and the first turbine rotating body 22.

Data marked with "c" in FIG. 9 represents the deflection of the first turbine rotating body 22 that occurs in the state that the upper-half housing 21a of the first turbine 20 is not mounted on the lower-half housing 21b and the connection of the first turbine rotating body 22 and the second turbine rotating body 32 are not connected. The degree of misalignment of the second coupling 23 in this case is relatively significant. This could cause a situation not allowing the misalignment (i.e., shift in central position) between the first coupling 13 and the second coupling 23 to be absorbed during the centering of the generator rotating body 12 and the first turbine rotating body 22.

For this reason, in a case where the degree of misalignment measured during the centering of the generator rotating body 12 and the first turbine rotating body 22 oversteps a predetermined permissible range, the second coupling 23 at the side of the first turbine rotating body 22 that faces the generator 10 would be suitably offset with a predetermined offset value. This offset value should preferably be equivalent to a difference between the position of the second coupling 23 existing when the upper-half housing 21a of the first turbine 20 is already mounted on the lower-half housing 21b and the position of the second coupling 23 existing when the upper-half housing 21a is not mounted. In this case, since the turbine rotating body already has its horizontal position adjusted during assembly, the shift in the position of the coupling, that is, an event that might be a problem during centering, occurs in a vertical direction. Accordingly, in a case where this vertical shift in the position of the coupling oversteps a predetermined permissible range, the coupling would be effectively offset in an appropriate direction (upward or downward) to cancel out the shift in position.

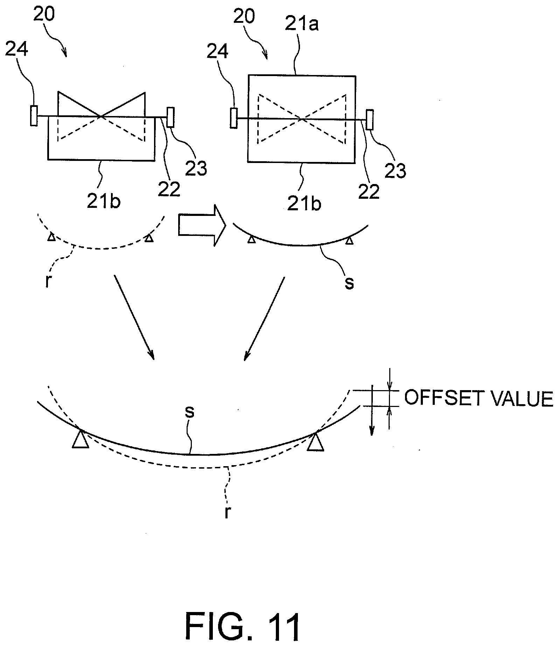

More specifically, depending on whether the upper-half housing 21a of the first turbine 20 is already mounted on the lower-half housing 21b, the position of the second coupling 23 present at an end of the first turbine rotating body 22 could change as shown in FIG. 11. With reference to FIG. 11, a deflection of the first turbine rotating body 22 without the upper-half housing 21a mounted in place is shown with dotted line "r", and a deflection of the first turbine rotating body 22 with the upper-half housing 21a mounted in place is shown with solid line "s". As can be seen from these observations, once the upper-half housing 21a has been mounted, the position of the second coupling 23 moves downward. For this reason, in a case where the position of the second coupling 23 oversteps a predetermined permissible range and moves upward during centering, the position of the second coupling 23 would be suitably offset downward with the above offset value that is equivalent to the difference between the position of the second coupling 23 existing when the upper-half housing 21a of the first turbine 20 is mounted on the lower-half housing 21b and the position of the second coupling 23 existing when the upper-half housing 21a is not mounted. The offset value should preferably be calculated from, for example, analysis or the like in advance. Offsetting the second coupling 23 in this way allows the connection of this coupling to the first coupling 13 of the generator rotating body 12 by displacing the second coupling 23 to the position in which the upper-half housing 21a of the first turbine 20 has been mounted. This connecting operation in turn allows the generator rotating body 12 and the first turbine rotating body 22 to be centered and connected before the upper-half housing 21a of the first turbine 20 is mounted, and thereby enables the operating efficiency to be improved. It should be noted that a jack-up device (not shown), for example, can be used to offset the coupling. The jack-up device may be removed after the installation of the upper-half housing 21a. In addition, the adjustment of the bearing corresponding to the second coupling 23 can be unnecessary if the second coupling 23 is offset.

Furthermore, if the second coupling 23 is offset, the offset value may be assigned as the difference between the position of the second coupling 23 existing when the second turbine rotating body 32 is connected to the first turbine rotating body 22, and the position of the second coupling 23 existing when the second turbine rotating body 32 is not connected.

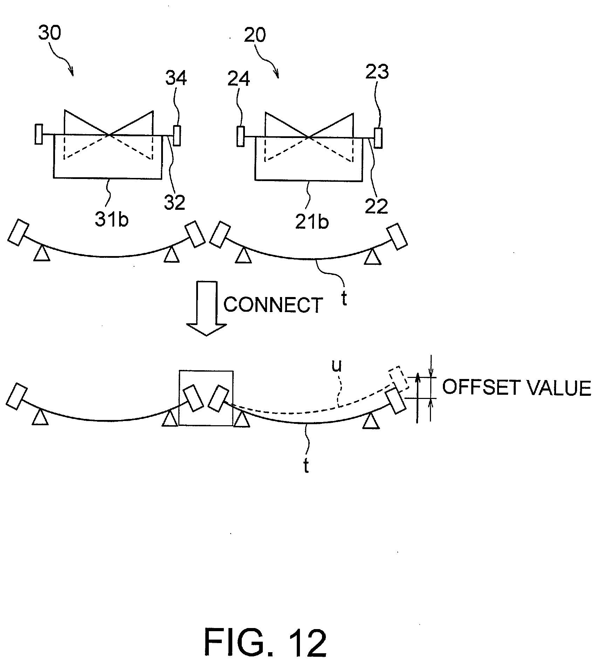

More specifically, depending on whether the second turbine rotating body 32 has already been connected to the first turbine rotating body 22, the position of the second coupling 23 present at the end of the first turbine rotating body 22 could change as shown in FIG. 12. With reference to FIG. 12, a deflection of the first turbine rotating body 22 existing before the second turbine rotating body 32 is connected is shown with solid line "t", and a deflection of the first turbine rotating body 22 with the second turbine rotating body 32 connected is shown with dotted line "u". As can be seen from these observations, once the second turbine rotating body 32 has been connected, the position of the second coupling 23 moves upward. For this reason, in a case where the position of the second coupling 23 oversteps a predetermined permissible range and moves downward during centering, the position of the second coupling 23 would be suitably offset upward with the above offset value that is equivalent to the difference between the position of the second coupling 23 existing when the second turbine rotating body 32 is connected to the first turbine rotating body 22, and the position of the second coupling 23 existing when the second turbine rotating body 32 is not connected. The offset value should preferably be calculated from, for example, analysis or the like in advance. Offsetting the second coupling 23 in this way allows the connection of this coupling to the first coupling 13 of the generator rotating body 12 by displacing the second coupling 23 to the position in which the second turbine rotating body 32 has been connected to the first turbine rotating body 22. This connecting operation in turn allows the generator rotating body 12 and the first turbine rotating body 22 to be centered and connected before the second turbine rotating body 32 is connected, and thereby enables the operating efficiency to be improved.

Furthermore, the offset value to be assigned for the second coupling 23 may instead be set as a value obtained by combining the offset values shown in FIGS. 11 and 12. The second coupling 23 can then be connected to the first coupling 13 of the generator rotating body 12 by displacing the second coupling 23 to the position that the second coupling 23 will take when the upper-half housing 21a of the first turbine 20 is mounted and the second turbine rotating body 32 is connected to the first turbine rotating body 22. The connection operation in turn allows the generator rotating body 12 and the first turbine rotating body 22 to be centered and connected before the upper-half housing 21a of the first turbine 20 is mounted and the second turbine rotating body 32 is connected, and thereby enables the operating efficiency to be improved.

In accordance with the embodiments described above, the operating efficiency of coupling the power generator and the turbine can be improved.

While certain embodiments of the present invention have been described, these embodiments have been presented by way of example only, and are not intended to limit the scope of the inventions. Indeed, the novel embodiments may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Further, it will be understood that these embodiments can be at least partially combined properly without departing from the gist of the present invention.

## Claims

1. A power generator and turbine coupling method for coupling an electric power generator (10), a first turbine (20) and a second turbine (30) in this order, the power generator (10) including a generator rotating body (12), the first turbine (20) including a first turbine rotating body (22) and the second turbine (30) including a second turbine rotating body (32), the method comprising:
assembling the power generator (10);
assembling the first turbine (20);
assembling the second turbine (30);
aligning a first coupling (13) of the generator rotating body (12) of the assembled power generator (10) and a second coupling (23) of the first turbine rotating body (22) of the assembled first turbine (20);
connecting the aligned first coupling (13) of the generator rotating body (12) and the aligned second coupling (23) of the first turbine rotating body (22); **characterized by** connecting a third coupling (24) of the first turbine rotating body (22) of the assembled first turbine (10) and a fourth coupling (33) of the second turbine rotating body (32) of the assembled second turbine (30);
wherein the assembling of the second turbine (30) or the connecting of the first turbine rotating body (22) and the second turbine rotating body (32) is performed in parallel with or after the aligning of the generator rotating body (12) and the first turbine rotating body (22).

2. The power generator and turbine coupling method according to claim 1, further comprising:
before the aligning of the generator rotating body (12) and the first turbine rotating body (22), connecting the third coupling (24) of the first turbine rotating body (22) of the first turbine (20) and a fifth coupling (43) of a third turbine rotating body (42) of a third turbine (40) disposed between the first turbine (20) and the second turbine (30);
wherein, in the connecting of the first turbine rotating body (22) and the second turbine rotating body (32), the first turbine rotating body (22) is connected to the second turbine rotating body (32) via the third turbine rotating body (42).

3. The power generator and turbine coupling method according to claim 2, wherein:
the third turbine (40) includes an upper-half housing (41a) and a lower-half housing (41b);
before the connecting of the first turbine rotating body (22) and the third turbine rotating body (42), the third turbine rotating body (42) is installed in the lower-half housing (41b) of the third turbine (40); and
after the connecting of the generator rotating body (12) and the first turbine rotating body (22), the upper-half housing (41a) of the third turbine (40) is mounted on the lower-half housing (41b).

4. The power generator and turbine coupling method according to any one of claims 1 to 3, wherein:
the first turbine (20) includes an upper-half housing (21a) and a lower-half housing (21b); and
in the assembling of the first turbine (20), the first turbine rotating body (22) is installed in the lower-half housing (21b) of the first turbine (20) and the upper-half housing (21a) of the first turbine (20) is mounted on the lower-half housing (21b) of the first turbine (20).

## Patentansprüche

1. Kopplungsverfahren für Stromerzeuger und Turbine zum Koppeln eines elektrischen Stromerzeugers (10), einer ersten Turbine (20) und einer zweiten Turbine (30) in dieser Reihenfolge, wobei der Stromerzeuger (10) einen Generator-Drehkörper (12) einschließt, die erste Turbine (20) einen ersten Turbinen-Drehkörper (22) einschließt und die zweite Turbine (30) einen zweiten Turbinen-Drehkörper (32) einschließt, wobei das Verfahren Folgendes umfasst:
Montieren des Stromerzeugers (10),
Montieren der ersten Turbine (20),
Montieren der zweiten Turbine (30),
Ausrichten einer ersten Kupplung (13) des Generator-Drehkörpers (12) des montierten Stromerzeugers (10) und einer zweiten Kupplung (23) des ersten Turbinen-Drehkörpers (22) der montierten ersten Turbine (20),
Verbinden der ausgerichteten ersten Kupplung (13) des Generator-Drehkörpers (12) und der ausgerichteten zweiten Kupplung (23) des ersten Turbinen-Drehkörpers (22), **gekennzeichnet durch**
Verbinden einer dritten Kupplung (24) des ersten Turbinen-Drehkörpers (22) der montierten ersten Turbine (20) und einer vierten Kupplung (33) des zweiten Turbinen-Drehkörpers (32) der montierten zweiten Turbine (30),
wobei das Montieren der zweiten Turbine (30) oder das Verbinden des ersten Turbinen-Drehkörpers (22) und des zweiten Turbinen-Drehkörpers (32) parallel mit oder nach dem Ausrichten des Generator-Drehkörpers (12) und des ersten Turbinen-Drehkörpers (22) durchgeführt wird.

2. Kopplungsverfahren für Stromerzeuger und Turbine nach Anspruch 1, das ferner Folgendes umfasst:
vor dem Ausrichten des Generator-Drehkörpers (12) und des ersten Turbinen-Drehkörpers (22) das Verbinden der dritten Kupplung (24) des ersten Turbinen-Drehkörpers (22) der ersten Turbine (20) und einer fünften Kupplung (43) eines dritten Turbinen-Drehkörpers (42) einer dritten Turbine (40), die zwischen der ersten Turbine (20) und der zweiten Turbine (30) angeordnet ist,
wobei, beim Verbinden des ersten Turbinen-Drehkörpers (22) und des zweiten Turbinen-Drehkörpers (32), der erste Turbinen-Drehkörper (22) über den dritten Turbinen-Drehkörper (42) mit dem zweiten Turbinen-Drehkörper (32) verbunden wird.

3. Kopplungsverfahren für Stromerzeuger und Turbine nach Anspruch 2, wobei:
die dritte Turbine (40) ein oberes Halbgehäuse (41a) und ein unteres Halbgehäuse (41b) einschließt,
vor dem Verbinden des ersten Turbinen-Drehkörpers (22) und des dritten Turbinen-Drehkörpers (42) der dritte Turbinen-Drehkörper (42) in dem unteren Halbgehäuse (41b) der dritten Turbine (40) eingebaut wird und
nach dem Verbinden des Generator-Drehkörpers (12) und des ersten Turbinen-Drehkörpers (22) das obere Halbgehäuse (41a) der dritten Turbine (40) an dem unteren Halbgehäuse (41b) angebracht wird.

4. Kopplungsverfahren für Stromerzeuger und Turbine nach einem der Ansprüche 1 bis 3, wobei:
die erste Turbine (20) ein oberes Halbgehäuse (21a) und ein unteres Halbgehäuse (21b) einschließt und
beim Montieren der ersten Turbine (20) der erste Turbinen-Drehkörper (22) in dem unteren Halbgehäuse (21b) der ersten Turbine (20) eingebaut wird und das obere Halbgehäuse (21a) der ersten Turbine (20) an dem unteren Halbgehäuse (21b) der ersten Turbine (20) angebracht wird.

## Revendications

1. Générateur d'énergie et procédé de couplage de turbine destiné à coupler un générateur d'énergie électrique (10), une première turbine (20) et une seconde turbine (30) dans cet ordre, le générateur d'énergie (10) comprenant un corps rotatif de générateur (12), la première turbine (20) comprenant un corps rotatif de première turbine (22), et la seconde turbine (30) comprenant un corps rotatif de seconde turbine (32), le procédé comprenant :
l'assemblage du générateur d'énergie (10) ;
l'assemblage de la première turbine (20) ;
l'assemblage de la seconde turbine (30) ;
l'alignement d'un premier couplage (13) du corps rotatif de générateur (12) du générateur d'énergie assemblé (10) et d'un second couplage (23) du corps rotatif de première turbine (22) de la première turbine assemblée (20) ;
le raccordement du premier couplage aligné (13) du corps rotatif de générateur (12) et du second couplage aligné (23) du corps rotatif de première turbine (22) ; **caractérisé par**
le raccordement d'un troisième couplage (24) du corps rotatif de première turbine (22) de la première turbine assemblée (10) et d'un quatrième couplage (33) du corps rotatif de seconde turbine (32) de la seconde turbine assemblée (30) ;
dans lequel l'assemblage de la seconde turbine (30) ou le raccordement du corps rotatif de première turbine (22) et du corps rotatif de seconde turbine (32) est effectué parallèlement à ou après l'alignement du corps rotatif de générateur (12) et du corps rotatif de première turbine (22).

2. Générateur d'énergie et procédé de couplage de turbine selon la revendication 1, comprenant en outre :
avant l'alignement du corps rotatif de générateur (12) et du corps rotatif de première turbine (22), le raccordement du troisième couplage (24) du corps rotatif de première turbine (22) de la première turbine (20) et d'un cinquième couplage (43) d'un corps rotatif de troisième turbine (42) d'une troisième turbine (40) disposée entre la première turbine (20) et la seconde turbine (30) ;
dans leguel, lors du raccordement du corps rotatif de première turbine (22) et du corps rotatif de seconde turbine (32), le corps rotatif de première turbine (22) est relié au corps rotatif de seconde turbine (32) via le corps rotatif de troisième turbine (42).

3. Générateur d'énergie et procédé de couplage de turbine selon la revendication 2, dans lesquels :
la troisième turbine (40) comprend un demi-logement supérieur (41a) et un demi-logement inférieur (41b) ;
avant le raccordement du corps rotatif de première turbine (22) et du corps rotatif de troisième turbine (42), le corps rotatif de troisième turbine (42) est installé dans le demi-logement inférieur (41b) de la troisième turbine (40) ; et
après le raccordement du corps rotatif de générateur (12) et du corps rotatif de première turbine (22), le demi-logement supérieur (41a) de la troisième turbine (40) est monté sur le demi-logement inférieur (41b).

4. Générateur d'énergie et procédé de couplage de turbine selon l'une quelconque des revendications 1 à 3, dans lesquels :
la première turbine (20) comprend un demi-logement supérieur (21a) et un demi-logement inférieur (21b) ; et
lors de l'assemblage de la première turbine (20), le corps rotatif de première turbine (22) est installé dans le demi-logement inférieur (21b) de la première turbine (20) et le demi-logement supérieur (21a) de la première turbine (20) est monté sur le demi-logement inférieur (21b) de la première turbine (20).
